# EUROPEAN PATENT APPLICATION

(11) **EP 1 341 173 A1**
(43) Date of publication of application: **03.09.2003**
(21) Application number: 02028611.8
(22) Date of filing: 20.12.2002
(51) Int. Cl.: G11B 20/12, G11B 27/10, G11B 27/30, G11B 27/32

(54) **Information recording/reproducing apparatus and method for D terminal signal**

(30) Priority: 28.02.2002 JP 2002054901
(71) Applicant: Kabushiki Kaisha Toshiba, Tokyo (JP)
(72) Inventor: Kikuchi, Shinichi, 1-1-1,Shibaura, Minato-ku Tokyo 105-8001 (JP); Taira, Kazuhiko, 1-1-1,Shibaura, Minato-ku Tokyo 105-8001 (JP); Tsumagari, Yasufumi, 1-1-1,Shibaura, Minato-ku Tokyo 105-8001 (JP)
(74) Representative: Henkel, Feiler, Hänzel

(57) **Abstract**

There is disclosed an information recording/reproducing apparatus including an extraction unit (23) which receives a source signal including image signal standard information, and extracts/outputs the image signal standard information, a recording unit (13,24) which generates contents information having a pack form from the source signal, generates control information in accordance with the extracted image signal standard information, and records the information in a storage region of the recording medium, and a reproduction unit (25) which reads out the control information and contents information recorded in the storage region by the recording unit, demodulates the contents information, and reproduces the contents information based on the control information.

## Description

The present invention relates to an information recording/reproducing apparatus for recording media such as an optical disk and hard disk as objects, particularly to an information recording/reproducing apparatus which performs a recording process in accordance with image signal standard information such as D terminal.

In recent years, optical disk recording/reproducing apparatuses for dynamic images have been developed to play optical disks in which data such as video and sound are recorded. For example, the apparatuses such as laser disc (LD) and video compact disc (CD) have generally spread for purposes such as movie software and karaoke.

Above all, at present a digital versatile disc (DVD) standard has been proposed in which an internationally standardized moving image coding expert group (MPEG2) system is used and an AC3 audio compression system are used.

In this standard, in accordance with an MPEG2 system layer, MPEG2 is supported in the dynamic image compression system, and AC3 audio and MPEG audio are supported for the sound. Furthermore, sub image data constituted by compressing run length of bit map data for subtitle, and control data for special reproduction (navigation pack) such as fast-forward/rewind are added to the constitution.

Additionally, this standard supports ISO9660 and micro universal disc format (UDF) so that computer can read the data.

Moreover, as the standard of the media, following DVD-read only memory (ROM) as media for use in DVD-video, the standard (2.6 GB) of the DVD-RAM has also been completed, and a DVD-random access memory (RAM) drive has started to spread as a computer peripheral.

Furthermore, at present a real time recorder (RTR)-DVD standard has been completed, manufactured and marketed as a DVD video standard in which real-time recording/reproducing is possible using the DVD-RAM. This standard is developed based on a presently released DVD-video standard.

Here, for DVD video, video signal processing includes: inputting a signal; AD-converting the signal; and processing the digital signal. Moreover, a signal obtained by digitizing the video signal is digitized based on a standard of CCIR656.

Furthermore, in recent years, with generalization of digital broadcasting, interface "D terminal" for the digital broadcasting has started to spread. This includes types D1 to D5 which are different from one another in solution as follows.
D1: 525i
D2: 525i, 525p
D3: 525i, 525p, 1125i
D4: 525i, 525p, 1125i, 750p
D5: 525i, 525p, 1125i, 750p, 1125p

That is, these standards mean the following.
- 1125i: scanning line number 1125 lines (effective scanning line number 1080 lines), interlaced scanning system (interlace)
- 750p: scanning line number 750 lines (effective scanning line number 720 lines), progressive scanning system (progressive)
- 525p: scanning line number 525 lines (effective scanning line number 480 lines), progressive scanning system (progressive)
- 525i: scanning line number 525 lines (effective scanning line number 480 lines), interlaced scanning system (interlace)
Moreover, copy management information is superimposed upon VBI of Y signal, and copy generation management is performed.

However, the standard of DVD of the existing machine only reaches a resolution of 720^{∗}480 lines. Therefore, when a D1 or more source signal is supplied, the existing DVD recorder cannot record the images. Moreover, even an advanced machine having a higher resolution does not have a function of generating and recording/reproducing a control signal in consideration of the signal of the D terminal. Therefore, the conventional DVD recorder which does not have characteristics of the present invention has a problem that the recording cannot be performed in response to the signal of the D terminal.

An embodiment of the present invention may provide an information recording/reproducing apparatus for a signal of a D terminal as image signal standard information superimposed upon a source signal in consideration of the problem.

According to one aspect of the present invention, there is provided an information recording/reproducing apparatus which performs recording and reproducing with respect to a recording medium, comprises extraction section which receives the source signal including image signal standard information, and extracts and outputting the image signal standard information; recording section which generates contents information having a pack form from the source signal, and records the contents information together with control information for the image signal standard information outputted from the extraction section in a storage region of the recording medium; and reproduction section which reads the control information and contents information recorded in the recording medium by the recording section, demodulating the contents information, and reproducing the contents information based on the control information.

According to one embodiment of the present invention characterized as described above, in response to the signal of the D terminal superimposed upon the source signal, for example, stream information is stored in video manager information as a control signal. Moreover, the standard information of an image signal, that is, resolution information and aspect information are stored in a control pack in a video object unit of a video object set in a sequence header, stream of an MPEG video. Thereby, in the information recording/reproducing apparatus according to one embodiment of the present invention, the contents information can be stored in an optical disk as the recording medium using the signal superimposed upon the source signal, and video can be reproduced in image standard supplied by the D terminal signal.

It is to be noted that the information recording/reproducing apparatus of one embodiment of the present invention has an equivalent function/effect even for the recording media such as an optical disk and hard disk and further for a memory apparatus as objects.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a whole constitution of an information recording/reproducing apparatus according to one aspect of the present invention;
FIG. 2 is a block diagram showing one example of an encoder and decoder of the information recording/reproducing apparatus according to one aspect of the present invention;
FIG. 3 is a block diagram showing one example of the encoder particularly including an image reduction unit of the information recording/reproducing apparatus according to one aspect of the present invention;
FIG. 4 is a diagram showing one example of a directory structure of a recording medium handled by the information recording/reproducing apparatus according to one aspect of the present invention;
FIG. 5 is a diagram showing one example of a structure of VOBS in the directory structure of the recording medium handled by the information recording/reproducing apparatus according to one aspect of the present invention;
FIG. 6 is a diagram showing one example of the structure of M_VOB_STI in the directory structure of the recording medium handled by the information recording/reproducing apparatus according to one aspect of the present invention;
FIG. 7 is a diagram showing one example of the structure of a CTL pack in the directory structure of the recording medium handled by the information recording/reproducing apparatus according to one aspect of the present invention;
FIG. 8 is a flowchart showing a recording operation of the information recording/reproducing apparatus according to one aspect of the present invention;
FIG. 9 is a flowchart showing the recording operation of the information recording/reproducing apparatus according to one aspect of the present invention;
FIG. 10 is a flowchart showing an STI setting process of the information recording/reproducing apparatus according to one aspect of the present invention;
FIG. 11 is a flowchart showing a reproduction operation of the information recording/reproducing apparatus according to one aspect of the present invention;
FIG. 12 is a flowchart showing the reproduction operation of the information recording/reproducing apparatus according to one aspect of the present invention;
FIG. 13 is a flowchart showing a cell reproduction operation of the information recording/reproducing apparatus according to one aspect of the present invention;
FIG. 14 is a flowchart showing the cell reproduction operation of the information recording/reproducing apparatus according to one aspect of the present invention;
FIG. 15 is a block diagram showing one example of a D terminal information detection unit in the present embodiment;
FIG. 16 is a diagram showing one example of a control line specification of a D terminal in the present embodiment;
FIG. 17 is a diagram showing a format of MPEG video data in the present embodiment;
FIG. 18 is a flowchart showing a whole operation of the information recording/reproducing apparatus according to one aspect of the present invention;
FIG. 19 is a flowchart showing processing in handling only a D1 terminal of the information recording/reproducing apparatus according to one aspect of the present invention;
FIG. 20 is a block diagram showing one example of a constitution for a mute process in handling only the D1 terminal of the information recording/reproducing apparatus according to one aspect of the present invention; and
FIG. 21 is a flowchart showing an image reduction process in handling only the D1 terminal of the information recording/reproducing apparatus according to one aspect of the present invention.

An information recording/reproducing apparatus according to one aspect of the present invention will be described hereinafter in detail with reference to the drawings.

### <Structure of Information Recording/Reproducing Apparatus according to the Present Invention>

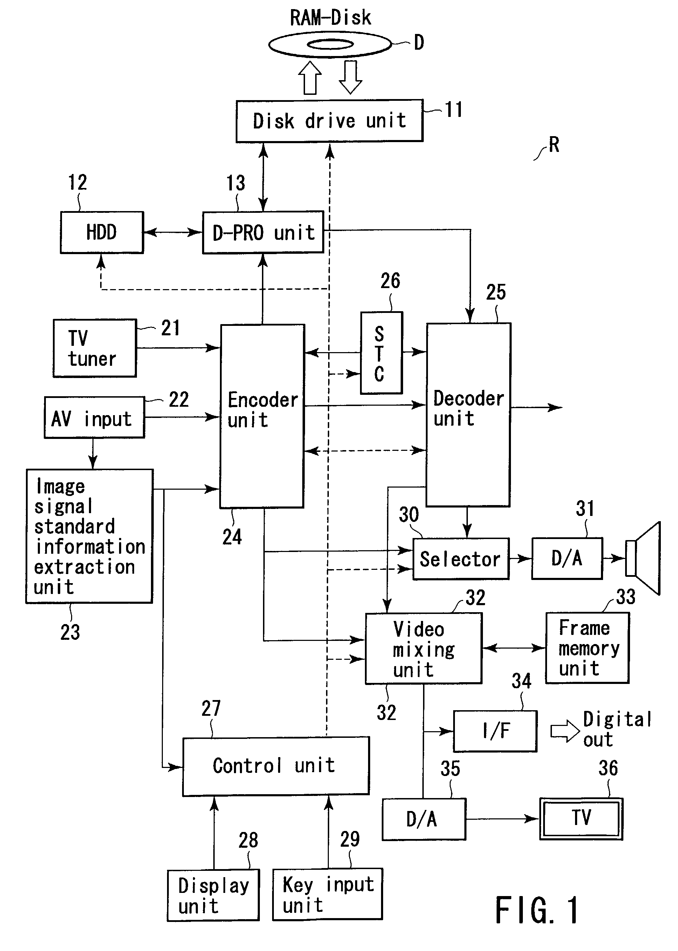

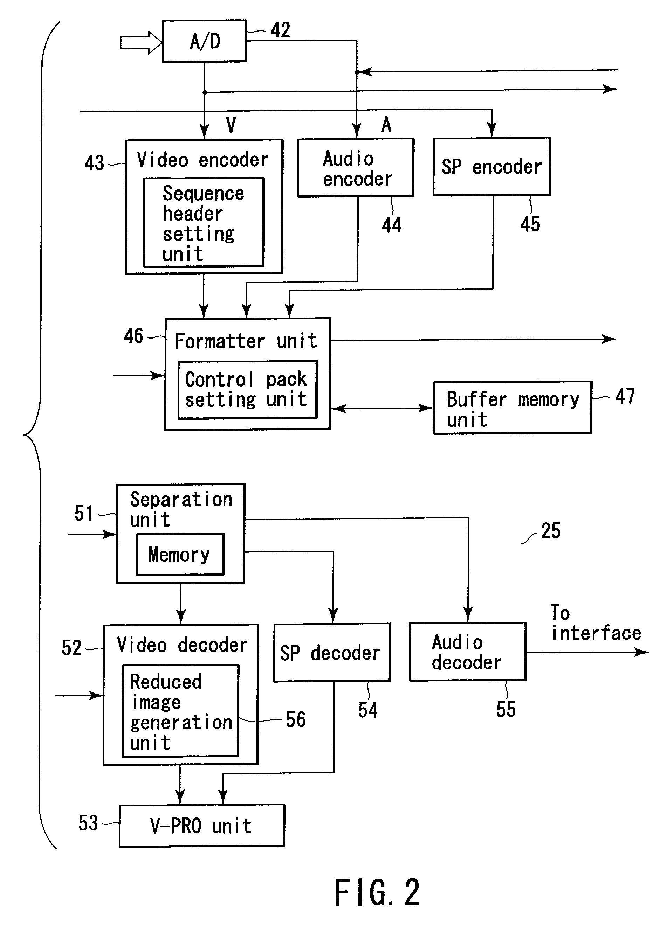

FIG. 1 is a block diagram showing a whole constitution of an information recording/reproducing apparatus according to one aspect of the present invention, and FIG. 2 is a block diagram showing one example of an encoder and decoder of the information recording/reproducing apparatus according to one aspect of the present invention. The present invention will be described hereinafter in terms of an example of a DVD recording/reproducing apparatus including a hard disk in this embodiment.

### (Structure)

For the information recording/reproducing apparatus according to one aspect of the present invention, FIG. 1 shows an information recording/reproducing apparatus which can handle both DVD-RAM and hard disk as recording media, but the present invention can also be applied to an apparatus which handles only one of the recording media. Moreover, even when the hard disk or DVD-RAM is replaced with a storage medium by a semiconductor memory, the equivalent function/effect is obtained.

For roughly divided blocks, FIG. 1 shows major blocks of a recording section on the left side, and major blocks of a reproduction section on the right side.

An information recording/reproducing apparatus R includes: a hard disk drive unit 12; a disk drive unit 11 for rotating/driving an optical disk D as an information storage medium which can construct a video file to read/write information; and a data processor unit 13 which can supply recording data to the hard disk drive unit 12 and disk drive unit 11 or which receives a reproduced signal. The data processor unit 13 handles data by a recording or reproducing unit, and includes a buffer circuit, modulation/demodulation circuit, and error correction unit.

Moreover, the information recording/reproducing apparatus includes major constituting elements such as an encoder unit 24 constituting a recording side, a decoder unit 25 constituting a reproducing side, and a control unit 27 which controls an operation of the whole apparatus.

As shown in (a) of FIG. 2, the encoder unit 24 includes an analog/digital converter for video and audio 42 which digitizes inputted analog video and audio signals, a video encoder 43, and an audio encoder 44. Furthermore, a sub picture encoder 45 is also included. Additionally, the encoder unit includes a formatter 46 which forms an output of each encoder into a predetermined format of DVD-RAM, and a buffer memory 47. Into the encoder unit 24, external analog video and audio signals from an AV input unit 22, or analog video and audio signals from a television (TV) tuner 21 are inputted.

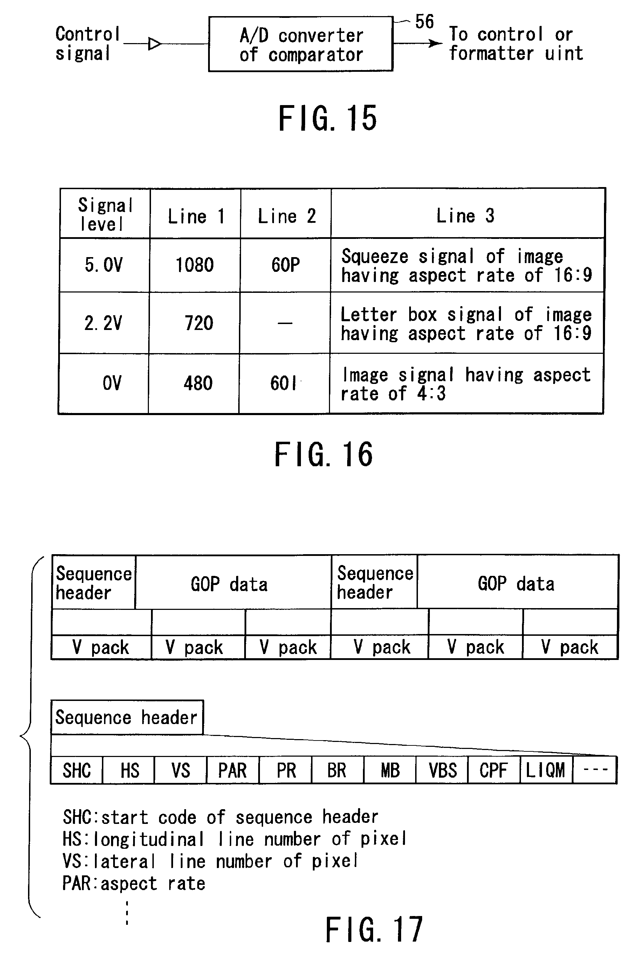

Furthermore, as another structural characteristic of the present invention, an image signal standard information extraction unit 23 is disposed to extract D terminal information from the AV input unit 22, and supplies extracted D terminal information to the encoder unit 24. The image signal standard information extraction unit 23 preferably uses an A/D converter or comparator 56 which is shown in FIG. 15 and which receives the control signal from the AV input unit 22.

It is to be noted that the encoder unit 24 directly supplies the directly inputted digital video and audio signals to the formatter 46. Moreover, the encoder unit can supply each video and audio data to a video mixing unit 32 and audio selector described later.

The decoder unit 25 converts the digital video signal to a digital video signal compressed at a variable bit rate based on MPEG2 or MPEG1 standard. The digital audio signal is converted to a digital audio signal compressed at a fixed bit rate or a digital audio signal of linear PCM based on MPEG or AC-3 standard.

When sub video information is inputted from the AV input unit 22 (e.g., a signal from a DVD video player to which an independent output terminal of a sub video signal is attached), or when DVD video signal including such data constitution is broadcasted and received by the TV tuner 21, the sub video information in the DVD video signal is encoded (run length is compressed) by a sub video encoder to form a bit map of sub video.

The encoded digital video signal, digital audio signal, and sub video data are packed in the formatter to form video, audio, and sub video packs. Furthermore, these are assembled and converted into a format defined by a DVD recording standard (standards such as DVD-RAM, DVD-R, DVD-Rw).

Here, the present apparatus supplies information encoded by the encoder unit 24 (video, audio, sub video data packs) and prepared management information to the hard disk drive unit 12 via the data processor unit 13 so that the information can be recorded in a hard disk. Moreover, the information recorded in the hard disk 12 can be recorded in the optical disk D via the data processor unit 13 and disk drive unit 11. This is because the information recorded in the hard disk drive unit 12 has the same data format as that of the optical disk D.

Furthermore, the information encoded by the encoder unit 24 and the prepared management information can directly be recorded in the optical disk D via the data processor unit 13 and disk drive unit 11. Furthermore, a "file or video object" recorded in the optical disk D and hard disk 12 can also be deleted.

Additionally, an edition process can also be performed which includes: partially deleting the video objects of a plurality of programs recorded in the hard disk 12 or optical disk D; or connecting the objects of different programs. This is because a data unit (described later) to be handled is defined by the format according to one aspect of the present invention and edition is facilitated.

Moreover, when the information recorded in the hard disk of the hard disk drive unit 12 is different from the data format of the optical disk D, the information read from the hard disk drive unit 12 is encoded by the encoder unit 24. Furthermore, the encoded information can be recorded in the optical disk D. Additionally, the disk drive unit 11 includes a rotation control system, laser drive system, and optical system with respect to the optical disk D.

The control unit 27 includes a micro processing unit (MPU) or central processing unit (CPU), ROM in which control programs are written, and RAM for providing a work area necessary for program execution.

The MPU of the control unit 27 uses the RAM as the work area in accordance with the control program stored in the ROM to execute defect place detection, unrecorded region detection, recording information recording position setting, UDF recording, and AV address setting.

Moreover, the control unit 27 includes an information processing unit necessary for controlling the whole system, and includes a work RAM, directory detection unit, VMG (whole video management information) information preparation unit, copy associated information detection unit, copy and scrambling information processing unit, packet header processing unit, sequence header processing unit, and aspect rate information processing unit.

For execution results of the MPU, content to be notified to a user is displayed in a display unit 28 of the DVD video recorder, or on-screen displayed (OSD) in a monitor display. Moreover, the control unit 27 includes a key input unit 29 which supplies an operation signal for operating the apparatus.

It is to be noted that timings for controlling the disk drive unit 11, data processor unit 13, encoder unit 24, and decoder unit 25 by the control unit 27 can be set based on time data from an STC 26. A recording or reproducing operation is usually executed in synchronization with a time clock from the STC 26, and other processes may be executed at a timing independent of that of the STC 26.

The decoder unit 25 includes: a separator for separating/extracting each pack from the signal of the DVD format including a pack structure; a memory for use in pack separation or in executing other signal processing; a V decoder which decodes main video data (content of the video pack) separated by the separator; a SP decoder which decodes the sub video data (content of the sub video pack) separated by the separator; and an A decoder which decodes audio data (content of the audio pack) separated by the separator. The unit also includes a video processor which appropriately synthesizes the decoded sub video data with the decoded main video data, superimposes the sub videos such as menu, highlight button, and subtitle upon the main video, and outputs the video.

An output video signal of the decoder unit 25 is inputted into the video mixing unit 32. The video mixing unit 32 synthesizes text data. Moreover, the video mixing unit 32 is also connected to a line for directly taking in the signals from the TV tuner 21 and AV input unit 22. The video mixing unit 32 is connected to a frame memory unit 33 for use as a buffer. For a digital output, the video mixing unit 32 outputs the output to the outside via an interface (I/F) 34. An analog output is outputted to the outside via a digital/analog converter 31.

The output audio signal of the decoder unit 25 is analog-converted by the D/A converter 31 and outputted to the outside via a selector 30. The selector 30 is controlled by a select signal from the control unit 27. Thereby, the selector 30 can directly select a signal passed through the encoder unit 24, when directly monitoring the digital signal from the TV tuner 21 or A/V input unit 22.

It is to be noted that the formatter of the encoder unit 24 prepares each segmenting information during the recording and periodically sends the information to the MPU of the control unit 27 (information at a GOP top interrupt time). The segmenting information includes the number of packs of VOBU, end address of I picture from the top of VOBU, and reproduction time of VOBU.

Additionally, the information from aspect information processing unit is sent to the MPU at a recording start time, and the MPU prepares VOB stream information (STI). Here, for STI, resolution data and aspect data are stored, and each decoder unit performs initial setting based on the information at a reproduction time.

Moreover, for the video file in the DVD recording/reproducing apparatus, one file is set for one disk.

Here, in the real-time recording/reproducing apparatus using DVD, it is to be noted that to access the data, a continuous sector is necessary at minimum in order to continue the reproduction without being interrupted during the access (seek). This unit is referred to as a contiguous data area (CDA). That is, a data size is determined beforehand to realize seamless reproduction.

The CDA is more advantageous with an error correction code (ECC) block unit. For this, the CDA size is set to a multiple of 16 sectors, and the recording is performed by a CDA unit in the file system. The data processor unit 13 receives the data from the formatter of the encoder unit 24 by a VOBU unit, and supplies the data to the disk drive unit 11 by the CDA unit. Moreover, the MPU of the control unit 27 prepares the management information necessary for reproducing the recorded data, and sends the prepared management information to the data processor unit 13 on recognizing a command for data recording end. Thereby, the management information is recorded in the disk. Therefore, when the encode is performed, the MPU of the control unit 27 receives the information of the data unit (segmenting information, and the like) from the encoder unit 24. Moreover, at a recording start time, the MPU of the control unit 27 recognizes the management information (file system) read from the disk and unrecorded area of the disk, and sets the recording area of the data to the disk via the data processor unit 13.

### (Directory Structure)

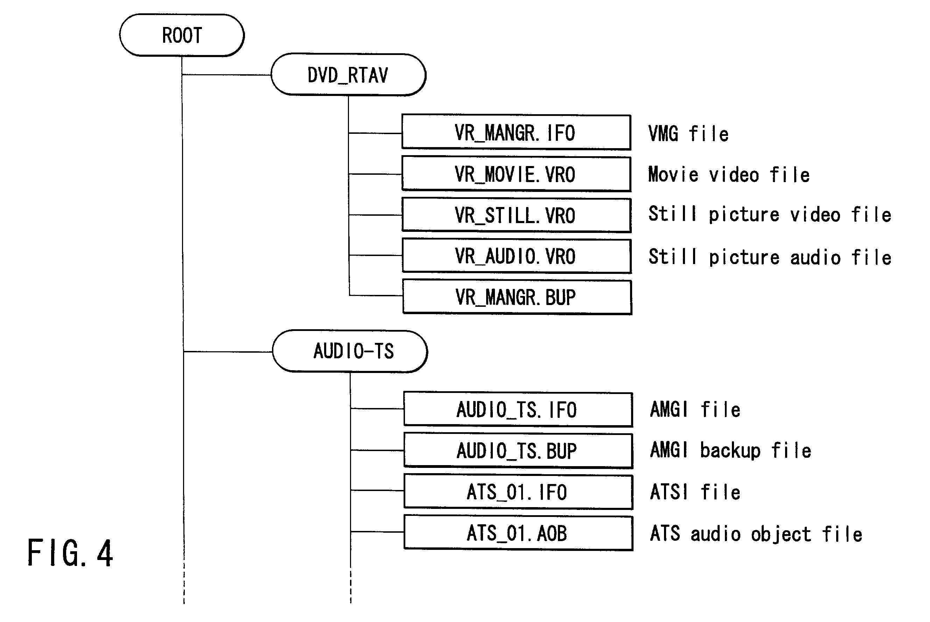

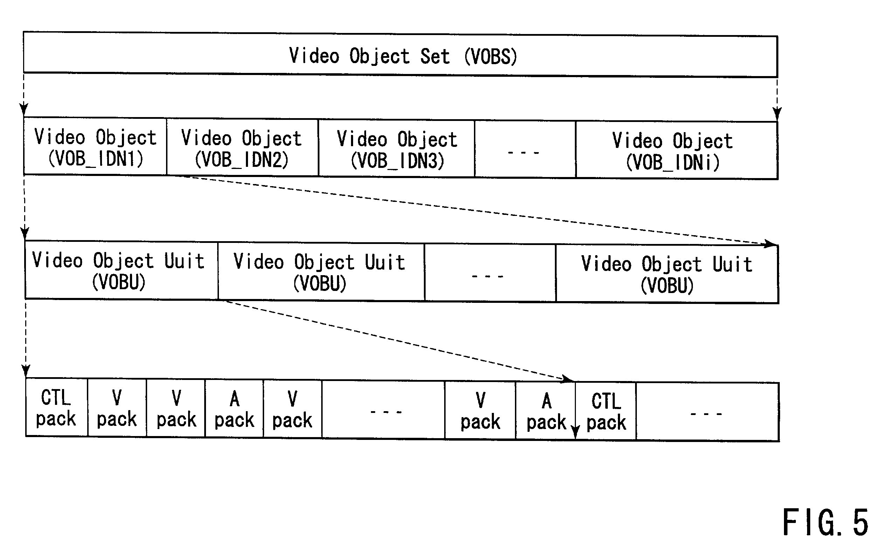

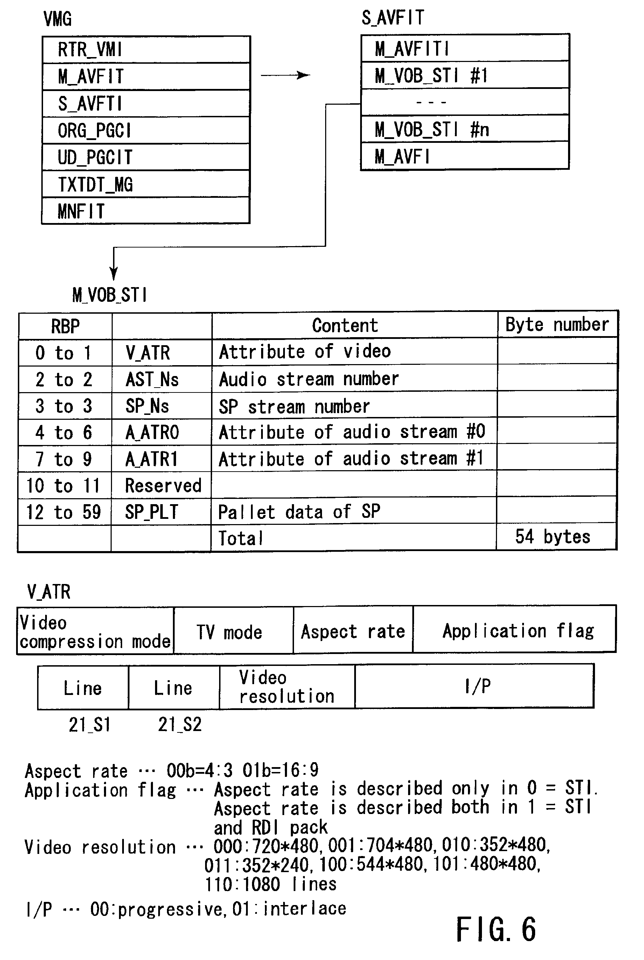

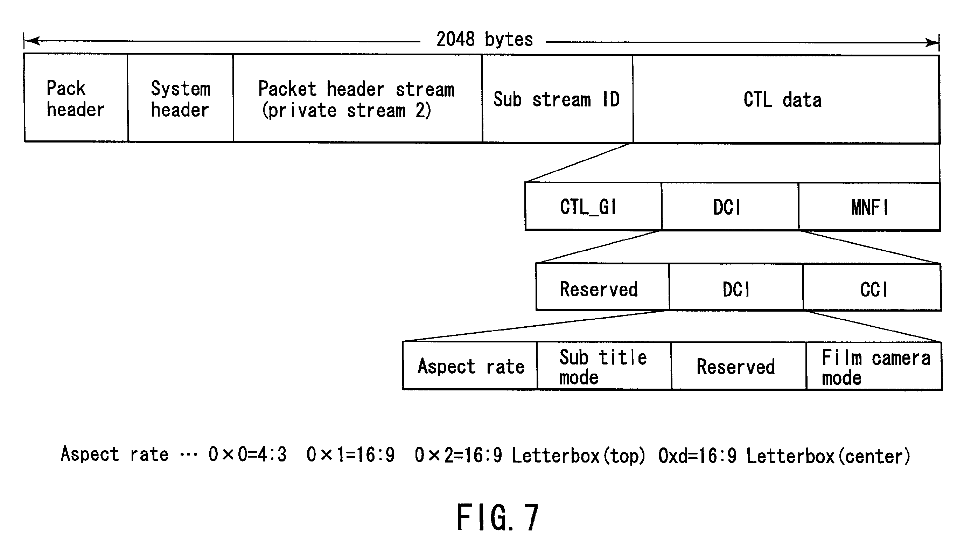

The directory structure of the data of the DVD standard, necessary for describing a processing concerning the D terminal signal of the information recording/reproducing apparatus according to one aspect of the present invention, will further be described hereinafter with respect to the drawings. FIG. 4 is a diagram showing one example of the directory structure of the recording medium handled by the information recording/reproducing apparatus according to one aspect of the present invention, FIG. 5 is a diagram showing one example of the structure of VOBS in the directory structure, FIG. 6 is a diagram showing one example of the structure of M_VOB_STI in the directory structure, and FIG. 7 is a diagram showing one example of the structure of a CTL pack in the directory structure.

In these diagrams, in the DVD standard, the data is stored in a usual file form. Furthermore, a title corresponds, for example, to one movie, and one disk stores a plurality of titles. A group of the titles is referred to as a title set, and the title set is constituted of a plurality of files.

Additionally, a directory exists for each standard in DVD, VIDEO_TS exists in DVD-video, AUDIO_TS exists in DVD-audio, and DVD_RTR exists in RTR-DVD. Each recording data exists in the directory.

Moreover, for DVD-video, in one disk, a file referred to as a video manager (hereinafter referred to as VMG) exists as information for managing the disk.

Furthermore, for the title set (hereinafter referred to as VTS), the information for managing the title set is constituted of a management information file of video title set information (hereinafter referred to as VTSI), video file including video data, and backup file of VTSI.

In RTR-DVD, the VTSI and VMGI are combined to constitute a new VMGI.

In FIG. 4, in directory "DVD_RTAV", there exist VR_{_}MANGR.IFO as a video manager file, VR_MOVIE.VRO as a movie video file, VR_STILL.VRO as a still picture video file, VR_AUDIO.VRO as an additional audio file, and VR_MANAGR.BUP as a backup file of a video manager.

In the VR_MANGR.IFO file, navigation data is recorded, and the navigation data is data for allowing a program set, program, entry point, and play list to proceed.

The VR_MOVIE.VRO file is a so-called movie AV file for recording a movie video object (movie VOB).

The VR_STILL.VRO is a still picture AV file for recording still picture VOB.

Moreover, the VR_AUDIO.VRO is an additional audio file for recording an additional audio stream with respect to a still picture.

The VR_MOVIE.VRO is used to record an original VOB constituted of a video part including an arbitrary sub picture unit. Moreover, at this time, an audio part associated with the video part is also included in the original VOB.

The VR_AUDIO.VRO is a file used to record an additional audio part, and the additional audio part indicates an audio stream recorded by after-recording. The audio part recorded in the VR_{_}AUDIO.VRO is used in combination with several video parts recorded in VR_STILL.VRO. The VR_{_}MANAGR.BUP is a backup file of VR_MANGR.IFO.

According to the present invention, as described later, signal information of the D terminal is supplied as the information in movie video object stream information (M_VOB_STI) in a still picture AV file information table (S_AVFIT) of VR_MANGR.IFO.

Furthermore, as shown in FIG. 5, the video file has a hierarchical structure, one file is constituted of a plurality of VOBs, one VOB is constituted of a plurality of VOBUs, and one VOBU is constituted of the pack including a plurality of various types of data. The pack is constituted of one or more packets and pack header. The pack is a minimum unit to execute a data transfer process, a minimum unit to execute a logical process is a cell unit, and the logical process is executed by this unit.

The pack includes: a video pack including video information obtained by compressing video data and the packet header including video scrambling control information; an audio pack including audio information obtained by compressing audio data and the packet header including audio scrambling control information; and a control pack as management information.

According to the present invention, as described later, when the signal information of the D terminal is supplied to the control pack, the information recording/reproducing apparatus for the signal of the D terminal can be provided.

Moreover, an order of data to be reproduced is defined by a program chain (PGC), a plurality of programs (PG) are registered in the PGC, a cell is registered in the PG, and VOB is further registered as an object to be reproduced in the cell.

The structure of the PGC is actually recorded in program chain information (PGCI). A reproduction process is performed in accordance with the PGCI, and the PGCI is prepared at a recording or editing time.

Furthermore, in the DVD recording/reproducing apparatus, a special PGC for reproducing the data in a recording order is referred to as an original PGC, and the information of the original PGC is recorded in ORG_PGCI.

Additionally, attribute information (resolution information, aspect information, sound attribute information, and the like) of the video data at this time is recorded in STI in VMGI.

Moreover, FIG. 6 shows management information (referred to also as the navigation data for use in recording/reproducing the video or audio) managed in the file VR_MANGR.IFO in a hierarchical manner. The management information includes a real-time recording video manager (RTR_VMG). The RTR_VMG includes: an RTR video manager information (RTR_VMGI); a movie AV file information table (M_AVFIT); a still picture AV file information table (S_AVFIT); original PGC information (ORG_PGCI); a user definition PGC information table (UD_PGCIT); a text data manager (TXTDT_MG); and a preparer information table (MNFIT).

In RTR_VMGI, there are described: an identifier of the manager; start and end addresses of the manager; version information; a time zone for setting a time when the disk is used; still time indicating a time for displaying the still picture at a time when the reproduction ends; information of a character code for use as text information; a resume marker indicating interrupt position information at a time when the reproduction is discontinued midway; information of a disk representative image; and information of a disk representative name.

In the present invention, as described later, the signal information of the D terminal is recorded as M_OB_STI of the still picture AV file information table (S_AVFIT), and thereby the information recording/reproducing apparatus for the signal of the D terminal is provided.

Moreover, FIG. 7 is a diagram showing one example of the structure of the CTL pack in the directory structure of the recording medium handled by the information recording/reproducing apparatus according to one aspect of the present invention, and shows the CTL pack constituted of 2048 bytes.

Here, the hierarchical structure of CTL data is shown, and the signal information of the D terminal is supplied as one example of an aspect rate in a layer DCI under DCI as described later.

### <Operation of Information Recording/Reproducing Apparatus>

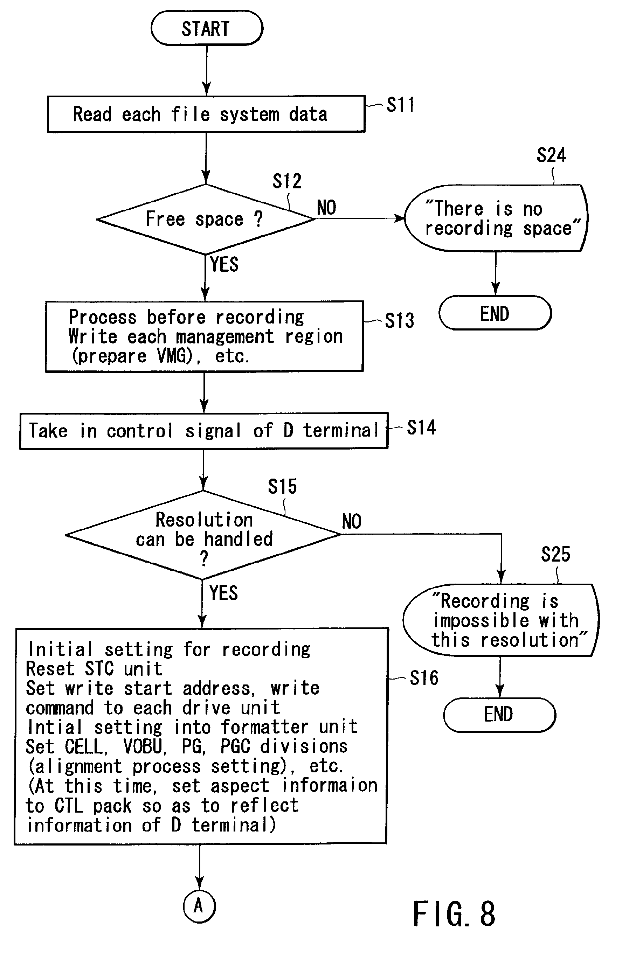

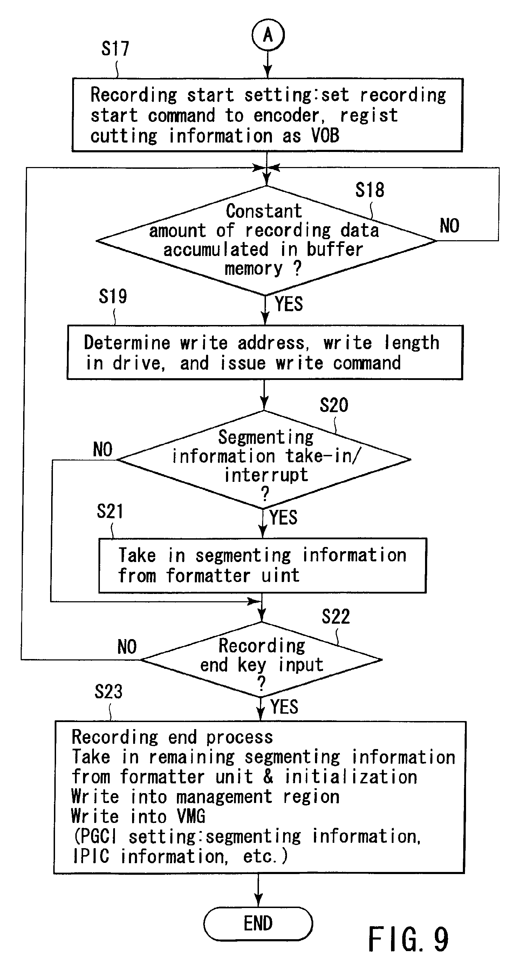

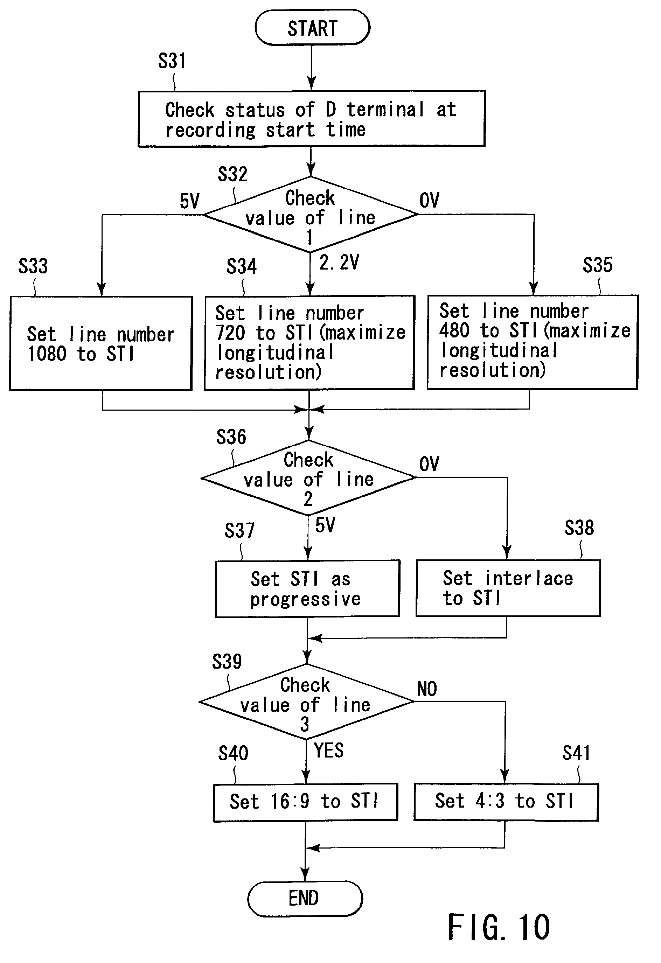

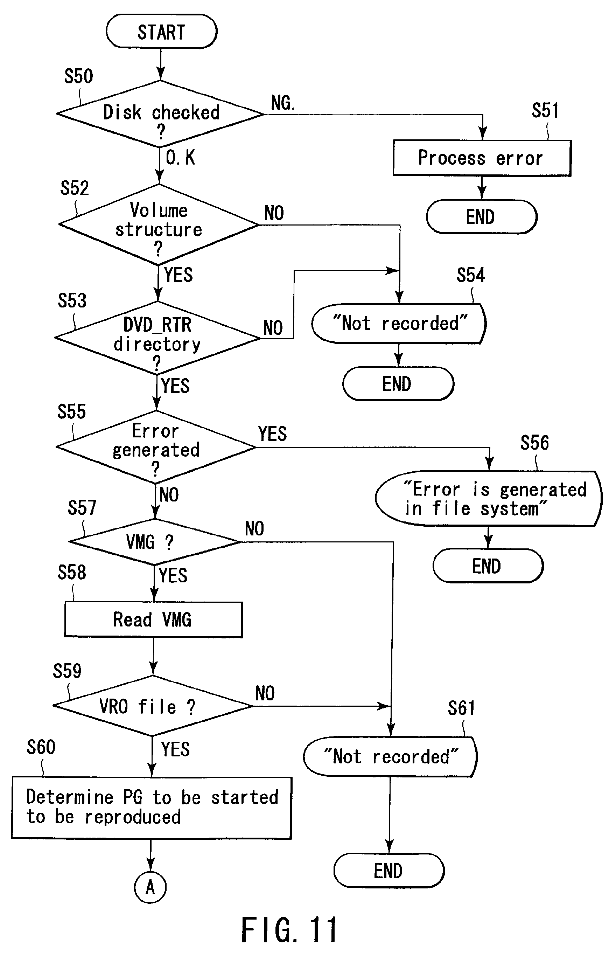

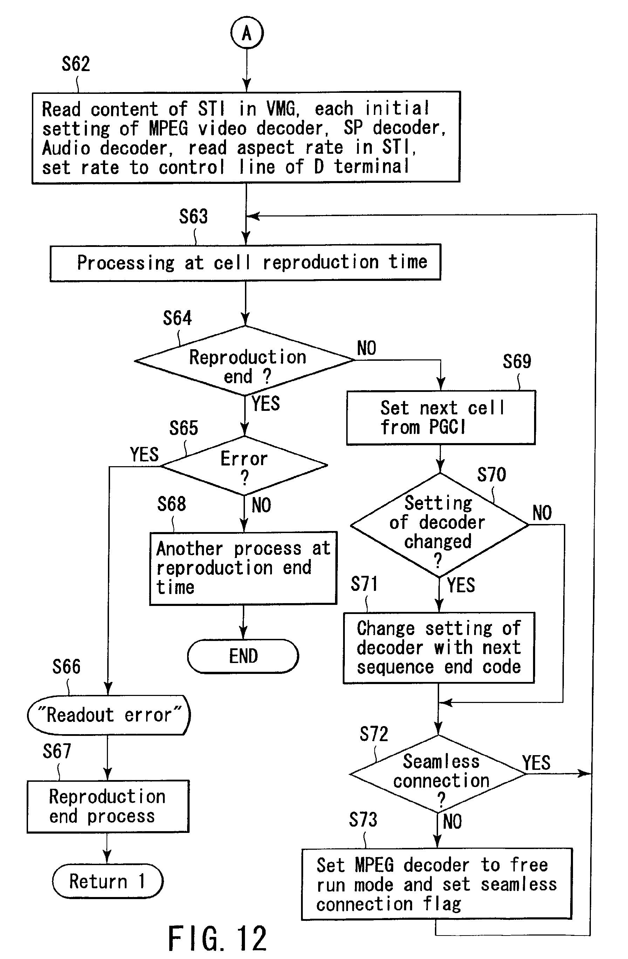

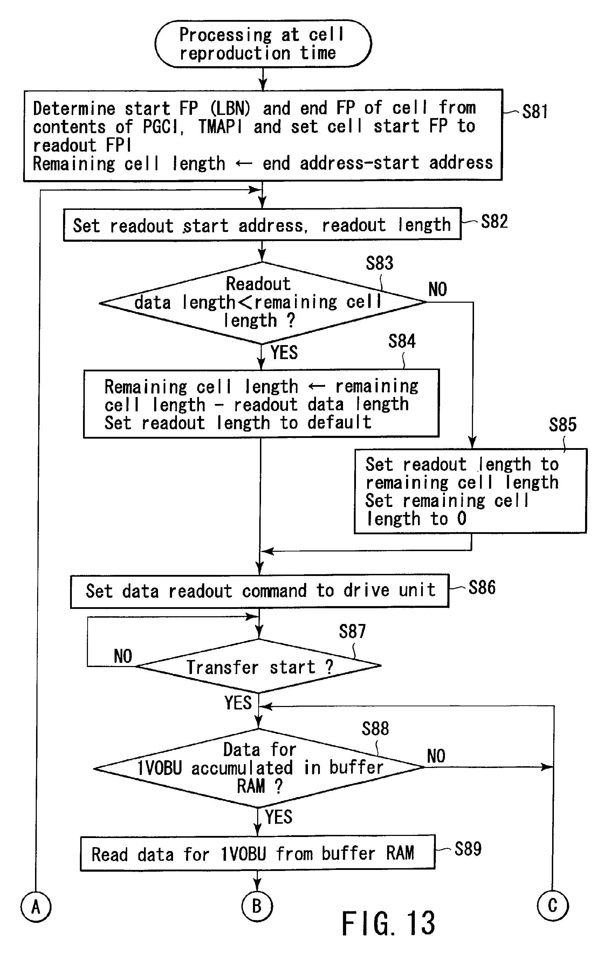

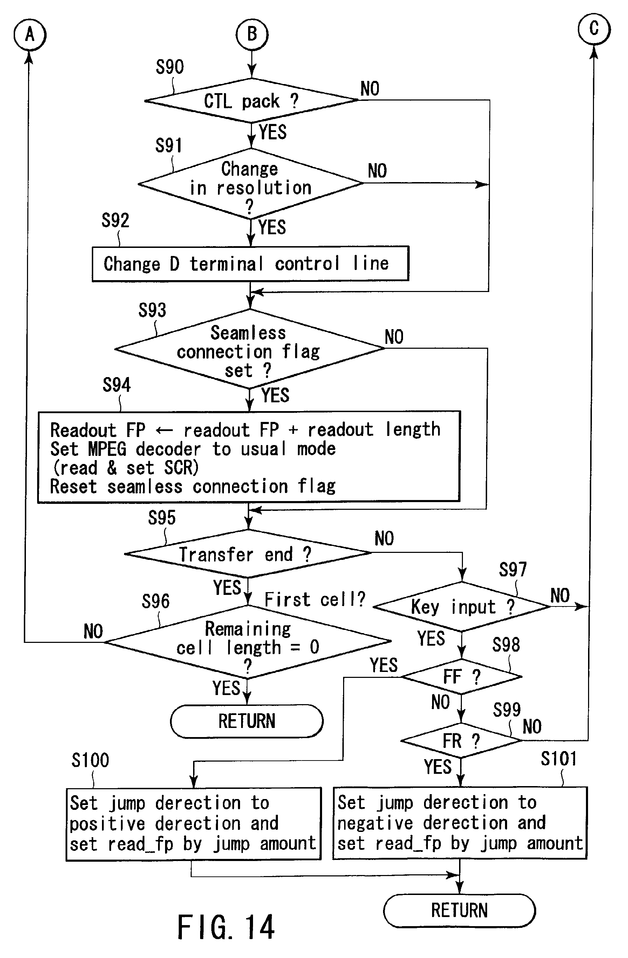

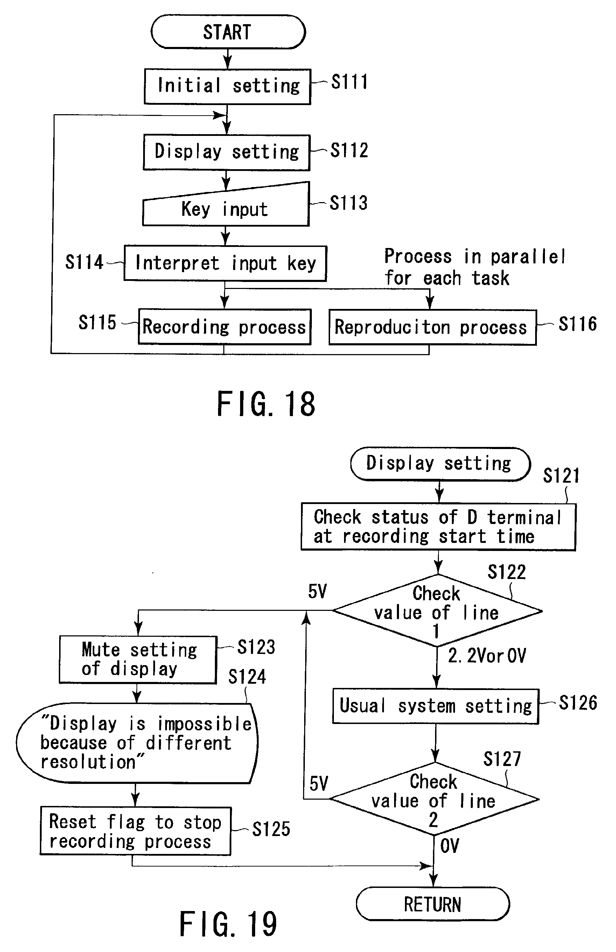

An operation of the information recording/reproducing apparatus according to one aspect of the present invention will also be described hereinafter in detail with reference to the drawings. FIG. 18 is a flowchart showing the whole operation of the information recording/reproducing apparatus according to one aspect of the present invention, FIGS. 8 and 9 are flowcharts showing a recording operation, FIG. 10 is a flowchart showing an STI setting process, FIGS. 11 and 12 are flowcharts showing a reproduction, and FIGS. 13 and 14 are flowcharts showing a cell reproduction operation.

As shown in FIG. 1, the information recording/reproducing apparatus according to one aspect of the present invention is constituted of the control unit 27, display unit 28, encoder unit 24, decoder unit 25, TV tuner 21, system time counter (STC) 26, D-PRO unit 13, disk drive unit 11, key input unit 29, video mixing unit 32, frame memory unit 33, D/A unit for TV 35, D/A unit for audio 31, HDD buffer unit 12, and selector of the audio signal 30.

As shown in FIG. 2, the encoder unit 24 is constituted of the A/D unit 42, video encoder 43, audio encoder 44, SP encoder 45, formatter 46, and buffer memory 47. The decoder unit 25 is constituted of a separation unit 51, video decoder 52, SP decoder 54, audio decoder 55, and video processing (V-PRO) unit 53.

The whole operation of the information recording/reproducing apparatus according to one aspect of the present invention will first be described with reference to the flowchart of FIG. 18. When power is turned on, initial setting is first given (S111). Subsequently, the setting concerning display is performed (S112). When there is an input by the user via the key input unit 29 (S113), the inputted key is interpreted (S114). Subsequently, a recording process (S115) or reproducing process (S116) is performed, and in accordance with these processes various parallel processes are executed for each task.

An outline of the processing of the video signal of the information recording/reproducing apparatus according to one aspect of the present invention will be described. First, the inputted AV signal is digital-converted by the A/D input unit 22. The digital signal is inputted into the respective encoders 43, 44, 45. The video signal is inputted into the video encoder 43, the audio signal is inputted into the audio encoder 44, and character data such as teletext broadcasting is inputted into the SP encoder 45. The video signal is MPEG-compressed, the audio signal is AC3-compressed or MPEG-audio compressed, and the character data is compressed in run length.

When the compressed data is packed, the data is formed into a packet of 2048 bytes, and inputted into the formatter 46 from the respective encoders 43, 44, 45. The formatter 46 packs and further multiplexes each packet, and sends the packet to the D-PRO unit 13.

Here, the formatter 46 prepares a CTR pack based on the information from the image signal standard information extraction unit 23, and disposes the pack in the top of VOBU.

Moreover, the encoder unit 24 writes the detected information into aspect information in a sequence header of MPEG video data based on the information from the image signal standard information extraction unit 23.

The D-PRO unit 13 forms an ECC block every 16 packs, and attaches error correction data, and the disk drive unit 11 records the data in the disk.

Here, with the disk drive unit 11 in a busy state during seeking or because of a track jump, the data is stored in the HDD buffer unit 12, and waits until the DVD-RAM drive unit 11 is prepared.

Furthermore, the formatter 46 prepares each segmenting information during the recording and periodically sends the information to the control unit 27 (GOP top interrupt). The segmenting information includes the number of packs of VOBU, end address of I pictures from the top of VOBU, and reproduction time of VOBU.

Additionally, at the recording start time, the information from the image signal standard information extraction unit 23 is sent to the control unit 27, VMGI is generated as the management information by the control unit 27, and STI is prepared as video attribute information in response to the signal of the D terminal. Here, STI includes the structure shown in FIG. 6, and stores resolution data and aspect data. At the reproduction time, the decoder unit 25 performs the initial setting based on the information. That is, in V_{_}ATR, an aspect rate for the signal of the D terminal is set to 4:3 or 16:9. When an application flat indicates 0, the aspect rate is described only in STI. When the flag indicates 1, the aspect rate is described both in STI and RDI packs. For the video resolution, 000 indicates 720^{*}480, 001 indicates 352*480, 011 indicates 352^{*}240, 100 indicates 544^{*}480, and 101 indicates 480^{*}480. Moreover, I/P of 00 indicates progressive, and 01 indicates interlace.

Furthermore, in the information recording/reproducing apparatus which handles DVD, one video file per disk is set.

The recording process will next be described in detail with reference to the flowcharts of FIGS. 8, 9, 10. In the information recording/reproducing apparatus according to one aspect of the present invention, first, when the file system of DVD-RAM is checked, and there is not the system, the file system is constructed (S11). Here, it is checked whether or not there is a free space (S12). If there is not the space, "there is no recording space" is displayed (S24). When there is the free space, the directory of DVD-RAM is checked (S12). When there is not RTR directory, the directory is prepared. VMGI is read into a work RAM from DVD-RAM. When there is not VMGI, VMGI is generated inside the RAM, and a VMGI table is constructed (S13).

The control signal of the D terminal is taken in (S14), and it is judged whether or not the resolution can be handled (S15). If not, display such as "recording is not possible with this resolution" is given and the process ends (S25).

Subsequently, the recording initial setting is performed on the encoder unit, and the unit is set so as to start the recording (S16). That is, the STC 26 is reset, and a write start address and write command are set to each drive unit. Subsequently, the initial setting is performed onto the formatter 46. Furthermore, CELL, VOBU, PG, PGC divisions are set. An alignment process is performed.

For the aspect information, to reflect the information of the D terminal, a pack structure of the control pack shown in FIG. 7, such as the aspect rate, is set into the control pack (S16). Furthermore, at an encode start time, resolution information is read from the image signal standard information extraction unit 23, and STI is set in accordance with a value in a procedure described later (S17). Thereby, a recording process is possible in which the signal of the D terminal is reflected.

It is judged whether a constant amount of recording data is accumulated in the buffer memory. When the encode data is accumulated for one recording (S18), the data is set to each disk drive unit 11 and recorded in the free space of DVD-RAM, and link information of a sector to be recorded is stored in the work RAM (S19).

When the segmenting information is accumulated (S20), the segmenting information is taken as VOBU management information into a read work RAM from the encoder. The setting process of the step S16 and the setting of STI of step S17 are repeated, until a recording end command is issued (S21).

Here, the encoder unit 24 receives the aspect information from the D terminal in the AV input unit 22, and sets the information into the sequence header of the MPEG video data in accordance with the resolution information as shown in FIG. 17 (S21). That is, in FIG. 17, in the sequence header of the format of the MPEG video data, HS denotes the number of longitudinal lines of a pixel, VS denotes the number of lateral lines of the pixel, and PAR denotes the aspect rate. Furthermore, by the function of the formatter 46, the same information is set also to the CTL pack, and notified to the control unit 27 by the segmenting information (S21). These processes are continued until the recording end key is inputted (S22).

Subsequently, the file system of DVD-RAM is further updated based on link information. That is, the formatter 46 takes in and initializes the remaining segmenting information. Furthermore, the information is written into the management information. Additionally, the VMG file is updated based on the management information in the work RAM, and recorded in the disk (S23).

Moreover, the above-described setting of STI will be described in detail with reference to the flowchart. That is, the control signal of the D terminal is first taken in, and a status of the D terminal at the recording start time is checked (S31). Furthermore, a value of line 1 is checked (S32). When the value of line 1 is 5 V, the number of lines is set to 1080 (S33). With 2.2 V, the number of lines is set to 720 (S34). With 0 V, the number of lines is set to 320 (S35).

Subsequently, the value of line 2 is checked (S36). When the value is 5 V, the STI is set to be progressive (S37). With 0 V, interlace is set (S38) .

Moreover, the value of line 3 is checked (S39). When the value of the line 3 is 5 V, 16:9 is set (S40). With 0 V, 4:3 is set (S41).

Furthermore, at this time, as described above, it is preferable to set the resolution data in the sequence header of the MPEG video data.

The image signal standard information extraction unit 23 takes out a line signal taken in with reference to FIG. 16 which shows control line specifications of the D terminal, and the A/D converter or comparator 56 converts the value to a value which can be read out by the control unit 27, so that the control unit 27 reads out the value. Here, FIG. 16 represents one example of the control line specifications by lines 1, 2, and 3. That is, when the line 1 indicates 5.0 V, the number of scanning lines is 1080. The line 2 indicating 5.0 V means 60 as progressive. The line 3 indicating 5.0 V means a squeeze signal of an image which has an aspect rate of 16:9.

### (Reproduction Process)

A reproduction process of the information recording/reproducing apparatus according to one aspect of the present invention will next be described in detail with reference to flowcharts. FIGS. 11 and 12 are flowcharts showing the reproduction operation of the information recording/reproducing apparatus according to one aspect of the present invention.

For the information recording/reproducing apparatus according to one aspect of the present invention, in the flowcharts of FIGS. 11 and 12, first a disk check is performed (S50). When an error is generated, error processing is performed (S51). Moreover, it is checked whether or not there is a volume structure (S52). If this structure does not exist, "not recorded" is displayed (S54). Similarly it is judged whether or not there is a DVD_RTR directory (S53). When the directory does not exist, "not recorded" is displayed (S54). Moreover, it is judged whether or not the error is generated (S55). When the error is generated, "error is generated in file system" is displayed (S56).

Subsequently, the presence/absence of VMG is judged (S57). With the absence, "not recorded" is displayed (S61). Furthermore, VMG is read (S58), and the presence/absence of VRO file is judged (S59). With the absence, "not recorded" is displayed. Next, a program (PG) to be started to be reproduced is determined (S60).

Next, content of STI in VMG is read, and each initial setting is performed with respect to the MPEG video data, SP decoder, Audio decoder. Furthermore, the aspect rate in STI is read, and set to the control line of the D terminal (S62).

Furthermore, a process at a cell reproduction time shown by the flowchart of FIG. 13 is performed (S63), and it is judged whether the reproduction ends (S64).

When the reproduction does not end, the next cell is set from PGCI (S69). When the setting of the data thereby changes (S70), the setting of the decoder is changed by the next sequence end code (S71). When the setting does not change, seamless connection is judged (S72). With the seamless connection, the processing at a cell reproduction time in step S63 is executed. When the seamless connection is not judged, the MPEG decoder is set to a free run mode, a seamless connection flag is set, and the processing at the cell reproduction time in step S63 is executed.

Moreover, when the error is generated in step S65, "readout error" is displayed (S66), and the reproduction end process is executed (S67). When the error is not generated, another processing at the reproduction end time is executed (S68).

### (Processing at Cell Reproduction Time)

The processing at the above-described cell reproduction time will further be described hereinafter in detail with reference to the flowcharts shown in FIGS. 13 and 14. That is, in the flowcharts of FIGS. 13 and 14, a start FP of the cell (LBN) and end FP are determined from the contents of PGCI and TMAPI, and cell start FP is set to readout FP (S81).

Furthermore, a start address to be read out and readout length are set (S82). When the remaining cell length is not longer than a readout data length (S83), the readout length is set to the remaining cell length, and the remaining cell length is set to "0" (S85).

When the remaining cell length is longer than the readout data length (S83), the readout length is set to default (S84). Moreover, a data readout command is set to the drive unit 11 (S86). Here, when transfer is started (S87), the accumulation of the data for one VOBU in the buffer RAM is confirmed (S88), and the data for one VOBU is read from the buffer RAM (589).

Here, when the control pack exists (S90), and there is a change in the resolution (S91), the D terminal control line is changed (S92). If not, the D terminal control line is not changed.

It is next judged whether or not the seamless connection flag is set (S93). If the flag is set, the readout FP and readout length are set to the readout FP. Moreover, the MPEG decoder is set to a usual mode, and SCR is read and set. Furthermore, the seamless connection flag is reset (S94).

Next, at the end of the transfer (S95), it is judged whether or not the cell is the last cell by judging whether or not the remaining cell length = 0 (S96). With the last cell, the process is ended. When the cell is not the last, the process returns to the first step S82, and the similar process is repeated.

Moreover, when the transfer does not end in the step S95, the presence/absence of the key input is judged (S97). When there is a key input and a positive direction is designated (S98), the jump direction is set to the positive direction, and read_fp is set by a jump amount (S100). When a negative direction is designated (S99), the jump direction is set to the negative direction, and read_fp is set by the jump amount (S101).

When there is not the key input (S97), and neither the positive or negative direction is set (S98, S99), the process returns to the step S88, and the similar process (steps S88 to S95) is performed.

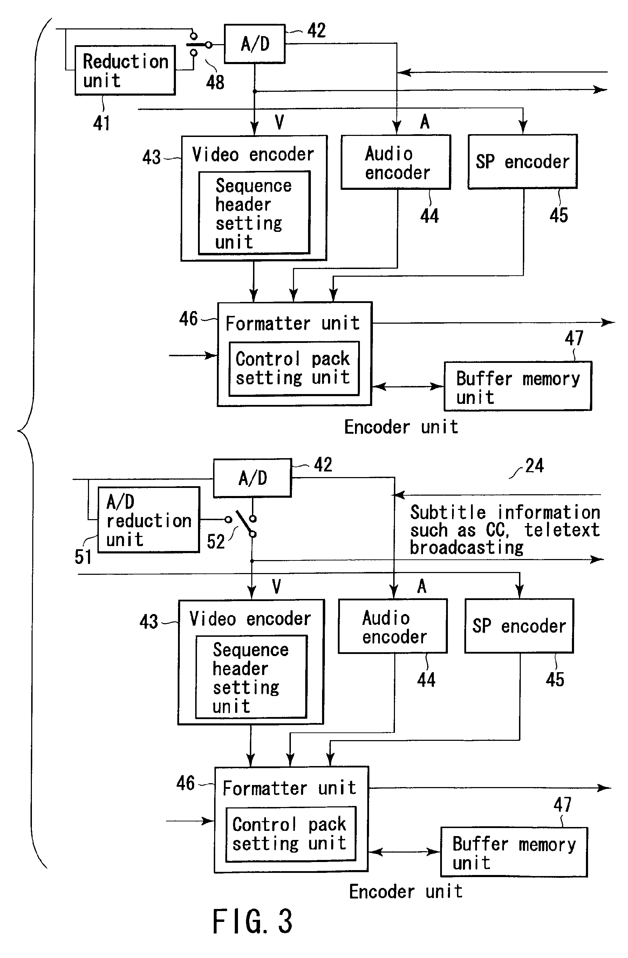

As described above, in the information recording/reproducing apparatus according to the present embodiment, to record the information corresponding to the signal of the D terminal as the image signal standard information, this is reflected in STI of VMGI as the management information shown in FIG. 6. Moreover, this is reflected as the control information of the control pack in the video object unit in the video object set in the stream shown in FIG. 3, and this is reflected as the control information of the sequence header in the MPEG video shown in FIG. 15. Thereby, there can be provided the information recording/reproducing apparatus which manages the signal of the D terminal.

### <Other Embodiments of Information Recording/Reproducing Apparatus>

In the above-described embodiments, the information recording/reproducing apparatus has been described which can handle all the resolutions of D1 to D5 as D terminal specifications. However, in the information recording/reproducing apparatus, the resolution of the image display is sometimes limited. For example, only the D1 terminal is supported. In this case, the recording/reproducing process of D1 or more source signals cannot be performed, a wrong operation is supposed to be generated, and the embodiments including countermeasures against the operation will be described hereinafter.

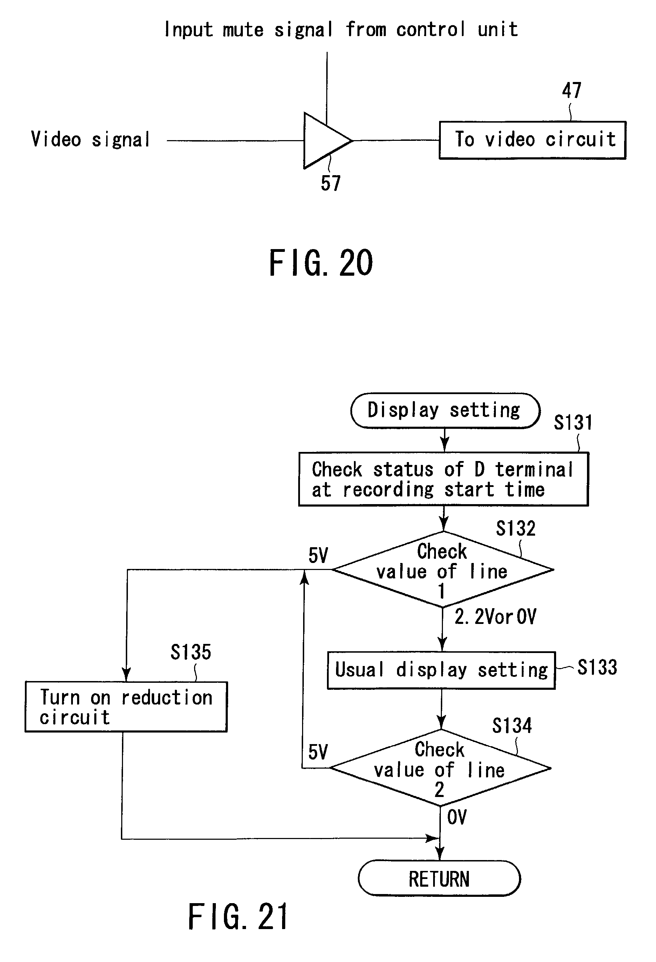

For characteristics of these countermeasures, FIG. 3 is a block diagram showing one example of the encoder particularly including an image reduction unit in the information recording/reproducing apparatus according to one aspect of the present invention, FIG. 2 is a block diagram showing one example of a constitution for a mute process in handling only the D1 terminal, and FIG. 21 is a flowchart showing an image reduction process.

That is, with the supply of the source signal having a high resolution which cannot be processed, it is preferable to mute the display and discontinue the supply or to stop the recording. In the flowchart of FIG. 19, the information recording/reproducing apparatus first checks the status of the D terminal at the recording start time (S121). That is, the value of the line 1 is checked (S122). When the value is 5 V, as shown in FIG. 20, the control unit 27 supplies a mute signal to a mute circuit 57 to which the given source signal is supplied (S123). Subsequently, "the display is impossible because of a different resolution" is displayed (S124). Moreover, the flag is set so that the recording process is stopped (S125).

Here, it is simply possible to mute the display, and it is also preferable to immediately stop the recording without muting the display.

Furthermore, as shown in a portion (a) of FIG. 3, a reduction unit 41 and switch 48 are added, and controlled by the control unit 27. The high resolution of the source signal which cannot be processed can also be reduced to a resolution which can be processed in order to process the signal. Moreover, a portion (b) in FIG. 3 shows an A/D reduction unit 51 which has an A/D converter function and which is opened/closed by a switch 52.

In the flowchart of FIG. 21, the status of the D terminal at the recording start time is checked (S131). Subsequently, the value of the line 1 is checked (S132). Moreover, with the value of 5V, the switch 48 or 52 is turned on to turn on the reduction circuit, and the resolution is reduced to the resolution which can be processed by the information recording/reproducing apparatus to process the signal (S135). When the line 1 indicates a value of 2.2 V or 0 V, the usual display is set (S133). Moreover, the value of the line 2 is checked (S134). When the value is 5 V, the reduction circuit is turned on to reduce the resolution (S135). With 0 V, the process returns to the usual process.

Thereby, even the source signal having the high resolution which cannot be processed by the information recording/reproducing apparatus can be recorded, reproduced, and processed, when the reduction unit 41 or A/D reduction unit 51 is used.

As described above, according to one aspect of the present invention, there can be provided an optical disk recording/reproducing apparatus which manages the signal of the D terminal.

## Claims

1. An information recording/reproducing apparatus which performs recording and reproducing data in a recording medium, **characterized by** comprising:
extraction section (22, 23) which receives a source signal including image signal standard information, and extracts and outputs the image signal standard information;
recording section (24, 27, 13, 11) which generates contents information having a pack form from the source signal, and records the contents information together with control information corresponding to the image signal standard information outputted from the extraction section in a storage region of the recording medium; and
reproduction section (13, 25) which reads the control information and contents information recorded in the recording medium by the recording section, demodulating the contents information, and reproducing the contents information based on the control information.

2. The information recording/reproducing apparatus according to claim 1, **characterized in that** the recording section generates management information, generates video attribute information included in the management information based on the image signal standard information outputted from the extraction section, and records the video attribute information in the storage region of the recording medium.

3. The information recording/reproducing apparatus according to claim 1, **characterized in that** the recording section formats the source signal into the contents information (FIG. 3) of the pack form including a control pack, video pack, and audio pack, and generates and records image standard information of the control pack based on the image signal standard information outputted from the extraction section.

4. The information recording/reproducing apparatus according to claim 1, **characterized in that** the recording section generates MPEG video data from the source signal, and generates and records image standard information included in a sequence header of the MPEG video data based on the image signal standard information outputted from the extraction section.

5. The information recording/reproducing apparatus according to claim 1, **characterized in that** the recording section includes:
means (27, 11) for generating the management information, generating the video attribute information included in the management information based on the image signal standard information outputted from the extraction section, and recording the video attribute information in the storage region of the recording medium;
means (27, 11) for generating MPEG video data from the source signal, and further generating and recording image standard information included in a sequence header of the MPEG video data based on the image signal standard information; and
means (27, 11) for formatting the MPEG video data into the contents information of the pack form including a control pack, video pack, and audio pack, and generating and recording image standard information of the control pack based on the image signal standard information.

6. The information recording/reproducing apparatus according to claim 1, **characterized in that** the extraction section is means for extracting and outputting the image signal standard information as D terminal information supplied from a D terminal.

7. The information recording/reproducing apparatus according to claim 1, **characterized by** further comprising: means for judging based on the image signal standard information extracted by the extraction section whether or not the source signal can be recorded in the storage region of the recording medium, judging that the source signal cannot be recorded, and then temporarily stopping the supply of the source signal into an encoder unit included in the recording section.

8. The information recording/reproducing apparatus according to claim 1, **characterized by** further comprising: means for judging based on the image signal standard information extracted by the extraction section whether or not the source signal can be recorded in the storage region of the recording medium, judging that the source signal cannot be recorded, and then stopping the recording of the source signal into the recording medium.

9. The information recording/reproducing apparatus according to claim 1, **characterized by** further comprising: means for judging based on the image signal standard information extracted by the extraction section whether or not the source signal can be recorded in the storage region of the recording medium, judging that the source signal cannot be recorded, then temporarily stopping the supply of the source signal into an encoder unit included in the recording section or stopping the recording of the source signal into the recording medium, and generating a display signal for displaying the stop.

10. The information recording/reproducing apparatus according to claim 1, further comprising:
means for judging based on the image signal standard information extracted by the extraction section whether or not the source signal can be recorded in the storage region of the recording medium, judging that the source signal cannot be recorded as such, and then reducing an image by an image reduction unit and subjecting an image signal of the source signal to predetermined processing to record the image signal in the storage region of the recording medium.

11. The information recording/reproducing apparatus according to claim 1, **characterized by** further comprising: section for judging based on the image signal standard information extracted by the extraction section whether or not the source signal can be displayed in the storage region of the recording medium, judging that the source signal cannot be displayed, and then temporarily stopping the supply of the source signal into an encoder unit included in the recording section.

12. The information recording/reproducing apparatus according to claim 1, **characterized by** further comprising: means for judging based on the image signal standard information extracted by the extraction section whether or not the source signal can be displayed in the storage region of the recording medium, judging that the source signal cannot be displayed, and then stopping the display of the source signal into the recording medium.

13. An information recording method in which recording and reproducing data in a recording medium, **characterized by** comprising:
an extraction step (S14, 22, 23) of receiving a source signal including image signal standard information, and extracting and outputting the image signal standard information; and
a recording step (S21, S22, 24, 27, 13, 11) of generating contents information having a pack form from the source signal, and recording the contents information together with control information corresponding to the image signal standard information outputted from the extraction step in a storage region of the recording medium.

14. The information recording method according to claim 13, **characterized in that** the recording step includes:
a step (27, 11) of generating the management information, generating the video attribute information included in the management information based on the image signal standard information outputted from the extraction step, and recording the video attribute information in the storage region of the recording medium;
a step (27, 11) of generating MPEG video data from the source signal, and further generating and recording image standard information included in a sequence header of the MPEG video data based on the image signal standard information; and
a step (27, 11) of formatting the MPEG video data into the contents information of the pack form including a control pack, video pack, and audio pack, and generating and recording image standard information of the control pack based on the image signal standard information.

15. The information recording method according to claim 13, **characterized in that** the extraction step includes: extracting and outputting the image signal standard information as D terminal information from a D terminal.

16. The information recording method according to claim 13, **characterized by** further comprising: judging based on the image signal standard information extracted by the extraction step whether or not the source signal can be recorded in the storage region of the recording medium, judging that the source signal cannot be recorded, and then temporarily stopping the supply of the source signal into an encoder unit included in the recording step.

17. The information recording method according to claim 13, **characterized by** further comprising: judging based on the image signal standard information extracted by the extraction step whether or not the source signal can be recorded in the storage region of the recording medium, judging that the source signal cannot be recorded, and then stopping the recording of the source signal into the recording medium.

18. The information recording method according to claim 13, **characterized by** further comprising: judging based on the image signal standard information extracted by the extraction step whether or not the source signal can be recorded in the storage region of the recording medium, judging that the source signal cannot be recorded, then temporarily stopping the supply of the source signal into an encoder unit included in the recording step or stopping the recording of the source signal into the recording medium, and generating a display signal for displaying the stop.

19. The information recording method according to claim 13, **characterized by** further comprising: judging based on the image signal standard information extracted by the extraction step whether or not the source signal can be recorded in the storage region of the recording medium, judging that the source signal cannot be recorded as such, and then reducing an image by an image reduction unit and subjecting an image signal of the source signal to predetermined processing to record the image signal in the storage region of the recording medium.

20. The information recording method according to claim 13, **characterized by** further comprising: judging based on the image signal standard information extracted by the extraction step whether or not the source signal can be displayed in the storage region of the recording medium, judging that the source signal cannot be displayed, and then temporarily stopping the supply of the source signal into an encoder unit included in the recording step.
